# EUROPEAN PATENT SPECIFICATION

(11) **EP 2 484 256 B1**
(45) Date of publication and mention of the grant of the patent: **20.01.2021**
(21) Application number: 12153911.8
(22) Date of filing: 03.02.2012
(51) Int. Cl.: A47J 45/07, A47J 36/34

(54) **Removable handle for pots, pans and the like**
Abnehmbarer Handgriff für Töpfe, Pfannen usw.
Poignée détachable pour des pots, poêles etc.

(30) Priority: 04.02.2011 IT VR20110020
(43) Date of publication of application: 08.08.2012
(73) Proprietor: TVS S.p.A, 61029 Urbino (PS) (IT)
(72) Inventor: Bertozzini, Giuseppe Alberto, 61029 Urbino (Pesaro Urbino) (IT)
(74) Representative: Feltrinelli, Secondo Andrea

(56) References cited:
- KR-A- 20040 043 798
- KR-A- 20100 098 021
- KR-B1- 100 751 239

## Description

### TECHNICAL FIELD OF THE INVENTION

The present invention concerns a removable handle for pots, pans and the like.

In particular, the present invention concerns a removable handle that can be used by the user for safely and efficiently holding pots, pans and the like, having different dimensions, thickness and weight.

### STATE OF THE ART

Removable handles for pots, pans or similar cooking vessels according to the state of the art are for instance described in KR20100098021A and KR20040043798A.

Removable handles are known that are used for holding pots, pans and the like, which conventionally comprise a holding element that is associated with removable means for anchoring to the pots and the like, also with different dimensions and thicknesses.

However, the anchoring obtained with known types of handles to the pots does not always ensure a safe and effective hold and, for this reason, the removable handles of the known type can also accidentally become unfastened, causing the pots and the like to fall and spill out their content dirtying the cooker top, work top and the floors, and also possibly causing damage, like for example burning, scratching and bruising, also to the users themselves.

Yet another problem of known handles of the removable type is their relative constructive complexity and therefore also the high production cost.

### PURPOSES OF THE INVENTION

The present invention attempts to overcome the problems of the state of the art by providing an improved removable handle for pots, pans and the like. The technical task of the present invention is therefore that of devising a handle for pots, pans and the like, which allows an optimal anchoring to the pots, pans and the like, also when there are different wall thicknesses, and that is much safer with respect to that which can be obtained with known types of handles, so as to avoid the risk of accidentally becoming unfastened and thus prevent the pots from falling and spilling out their content, keeping the users safe and keeping the work spaces clean and intact.

In such a technical task, one particular purpose of the present invention is to make a handle for pots, pans and the like, that can be used easily and rapidly and that has low production cost.

In accordance with the present invention, a handle for pots, pans and the like is presented according to claim 1.

The handle for pots, pans and the like, comprises at least one shaped grip that is associated with at least actuation means of removable members for anchoring to a pot and the like; such anchoring members are mobile from a non operative configuration, in which they are disengaged from the pot, to a coupling configuration, in which they are locked onto portions of the pot. The mentioned actuation means are associated to locking members of the anchoring members in the aforementioned coupling configuration, for safely and efficiently holding pots, pans and the like, thus avoiding accidental unfastening with consequent falling of the pot.

The dependent claims refer to preferred and advantageous embodiments of the invention.

### BRIEF DESCRIPTION OF THE DRAWINGS

The characteristics of the invention shall become clearer to any man skilled in the art from the following description and from the attached drawing tables, given as a non limiting example, in which:
figure 1 is a schematic perspective view of the handle for pots, pans and the like, according to the present invention;
figure 2 is a sectioned side view of the handle according to figure 1;
figure 3 is a detailed view of a detail of the section according to figure 2;
figure 4 is a top schematic view of the handle according to the present invention;
figure 5 is a perspective view of a detail of the grip of the handle according to the present invention;
figure 6 is a perspective view of a detail of a gripping head associated with a tubular body of anchoring members of the handle;
figure 7 is a perspective view of a detail of one stem of the anchoring members of the handle;
figure 8 is a perspective view of a detail of a retaining element of locking members of the handle;
figure 9 is a side view of a sectioned detail of another possible embodiment of the locking members of the handle;
figure 10 is a perspective view of a second handle not according to the invention, in non operative configuration;
figure 11 is a perspective view of the second handle in coupling configuration;
figure 12 is a schematic perspective view of a further version of the handle for pots, pans and the like, according to the present invention;
figure 13 is a side view in section of a further version of the handle according to figure 12;
figure 14 is a top schematic view of a further version of the handle, according to the present invention;
figure 15 is a schematic view from below of a further version of the handle, according to the present invention.

### EMBODIMENTS OF THE INVENTION

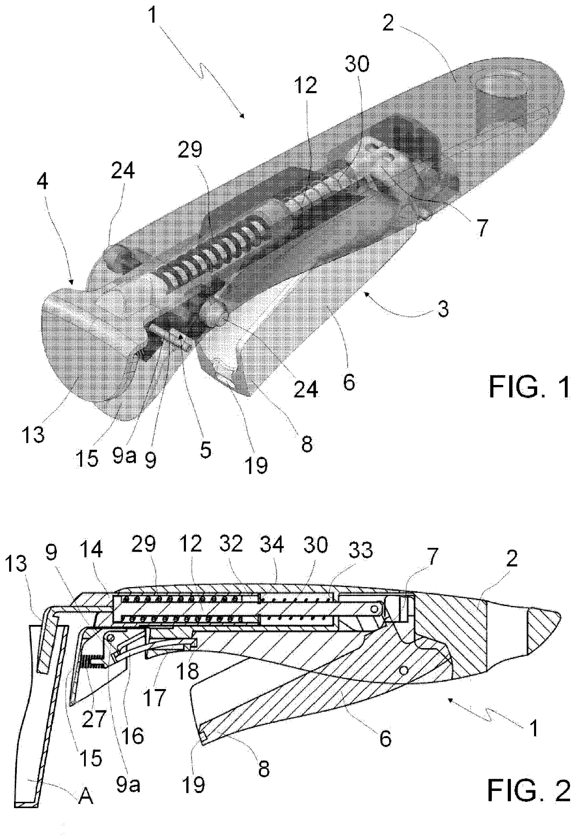

With reference to the attached figure 1, a handle for pots, pans and the like according to the present invention is wholly indicated with reference numeral 1.

The handle 1 for pots, pans, frying pans and the like, comprises at least one shaped grip 2 that is associated with at least actuation means 3 of removable members 4 for anchoring to a pot A and the like, said anchoring members 4 being movable from a non operative configuration, in which they are disengaged from the pot A, to a coupling configuration, in which they are locked onto portions of the pot A; the mentioned actuation means 3 are associated to locking members 5 of the anchoring members 4 in the aforementioned coupling configuration, for safely and efficiently holding pots, frying pans, pans and the like A.

One important characteristic of the present invention is that the actuation means 3 are operatively connected to the locking members 5 directly without intermediate transmission elements.

In particular, the aforementioned actuation means 3 comprise at least one lever element 6 that is hinged substantially in a rear portion of the grip 2 and that can be folded back inside it in the mentioned coupling configuration.

The lever element 6 is directly associated, with a first end 7, with the anchoring members 4 and can be engaged, with a second end 8, to the locking members 5 in the mentioned coupling configuration.

The movement of the actuation means 3 is efficient and without jamming since it comprises a simple kinematic chain for the transmission of motion between the lever element 6 and the anchoring members 4. Therefore, there is no loss of the force that is transmitted from the lever element 6 to the anchoring members 4 due to friction which could occur in a complex kinematic chain.

In particular, the locking members 5 can be removably snap-engaged with the anchoring members 4.

More in detail, the locking members 5 comprise at least one retaining element 9, for example shaped like a rocker arm, hinged to the grip 2, through a pin 9a, and equipped with at least a first toothing 10 that can be engaged with at least one respective second toothing 11 defined on the anchoring members 4.

Such anchoring members 4 comprise at least one stem 12 housed sliding inside the grip, associated at one end to the first end 7 of the lever element 6 and associated on the other end to at least one gripping head 13 projecting from the grip 2. The aforementioned gripping head 13 is associated with at least one tubular body 14 which is housed in the grip 2 and that in turn houses inside it at least one first section 12a of the stem 12, and the mentioned second toothing 11 is located on the tubular body 14, in particular in a rear portion thereof facing the first toothing 10 of the retaining element 9.

In the coupling configuration, portions of the inner and outer walls of the pot A are locked onto the handle 1 respectively between the gripping head 13 and at least one respective abutment surface 15 of the grip 2.

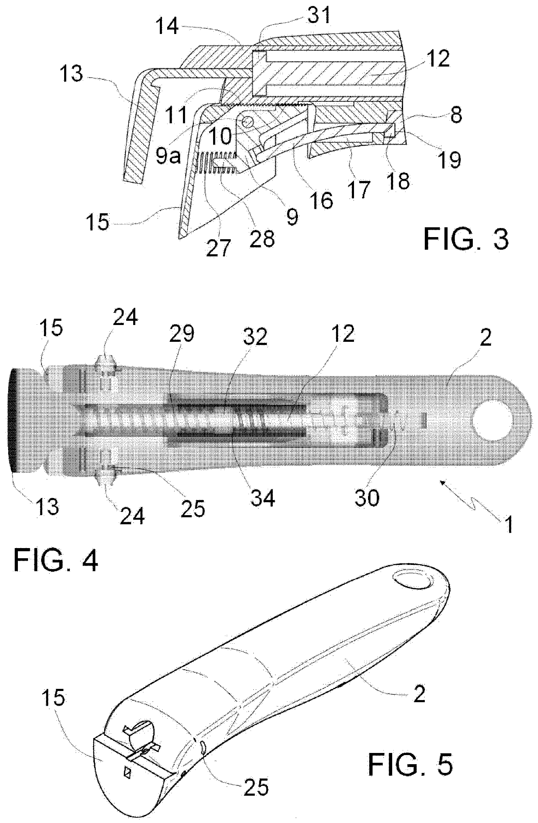

The locking members 5 can comprise an element 16, for example shaped as a curved plate, as illustrated in figure 3, for locking the lever element 6 in coupling configuration: such a locking element 16 is pivoted on one side to the retaining element 9, it is housed slidingly resting in a respective opening 17 of the grip 2, and it can be engaged with a shaped end 18 thereof in a seat 19 defined at the second end 8 of the lever element 6, so as to removably lock it in the coupling configuration.

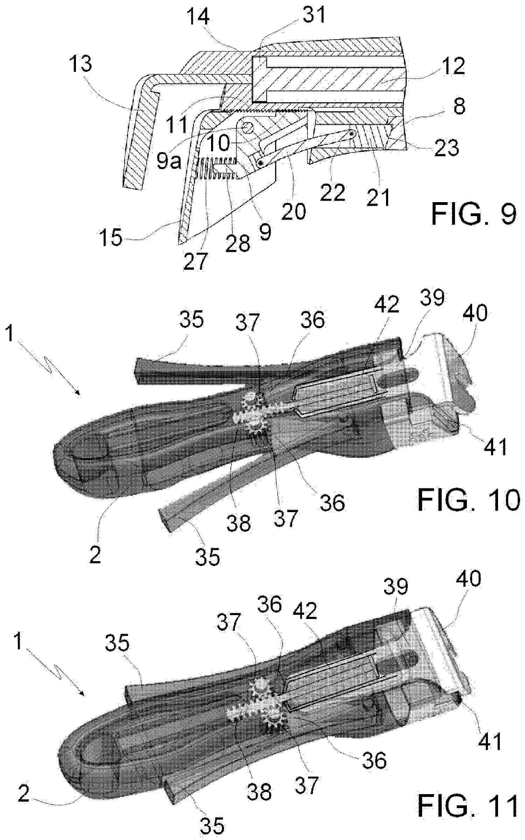

In another embodiment of the locking members 5 (visible in figure 9), these can comprise at least one connecting rod 20 that connects, on one side to the retaining element 9 and on the other side to at least one respective slide 21. The aforementioned slide 21 is slidingly housed inside a respective guide 22 of the grip 2 and can be engaged inside a shaped seat 23 defined at the second end 8 of the lever element 6, so as to lock the lever element 6 in the coupling configuration.

The handle 1 comprises, moreover, means for disengaging the locking members 5 from the anchoring members 4, so as to bring them back into the non operative configuration.

In particular, such disengaging means comprise at least one button 24 projecting laterally from the grip 2, which is associated to the retaining element 9 through a slot 25 formed in the body of the handle 1 (figure 5) .

The button 24 thus obtains the decoupling of the first toothing 10 from the second toothing 11, from the coupling configuration to the non operative configuration, so as to disengage the anchoring means 4 from the pot A.

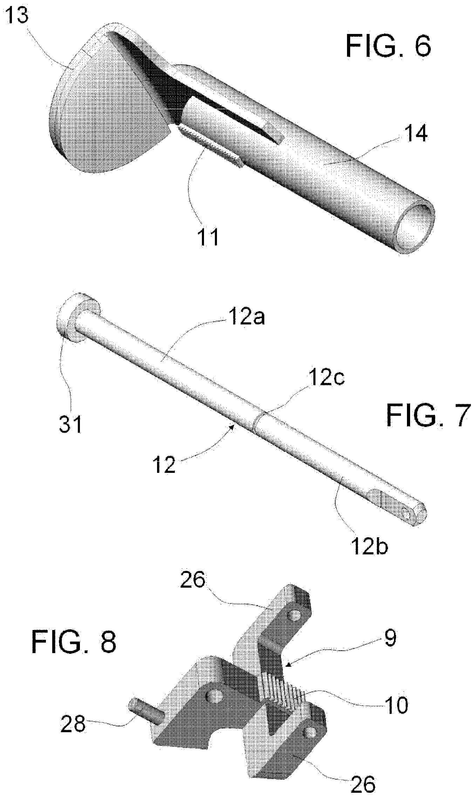

In particular, the disengaging means comprise two buttons 24 that are associated with two lateral projections 26 of the retaining element 9 (figure 8).

The mentioned retaining element 9 comprises first elastic retaining means 27, that are suitable for pushing it into the operative configuration.

In detail, the first elastic means comprise at least one first retaining spring 27 that is associated with a front pin 28 of the retaining element 9 and that abuts on the other side on the inner side of the abutment surface 15 of the grip 2 against portions of the pot A.

The anchoring members 4 comprise second elastic compensation means 29 located along the stem 12. More in detail, the second elastic means are located at least on the first section 12a of the stem 12, housed at least inside the tubular body 14. The second elastic compensation means 29 are suitable for adapting the closure of the gripping head 13 and the abutment surface 15 to the different thicknesses of the pot A.

Moreover, the anchoring members 4 comprise third elastic means 30, which are operatively connected to the stem 12, which are suitable for promoting a return of the anchoring members 4 themselves and of the lever element 6 into the non operative configuration, when it is desired to remove the handle 1 from the pot A.

In particular the third elastic means 30 are located in succession to the second elastic means 29 at least on one second section 12b of the stem 12.

More in detail, the mentioned second elastic means comprise at least one second compensation spring 29 located on at least the first section 12a of the stem 12 and housed at least inside the tubular body 14, between an end abutment head 31 of the stem 12 itself and a closing element 32 of the tubular body 14.

The third elastic means comprise at least one third spring 30 that is positioned in the second section 12b of the stem 12 between at least one shoulder 33 defined in the grip 2 and at least fixing means 34 of the closing element 32.

Such fixing means 34 can be made up of a stop ring, for example an elastic safety ring that is engaged in a respective annular throat 12c of the stem 12 located between the first section 12a and the second section 12b.

The length of the second compensation spring 29 is selected in relation to the thickness ranges of the wall of the pot to which the handle must be tightened.

In other words, the second spring 29 must offer a force that is sufficient for closing together the gripping head 13 and the abutment surface 15 when the wall of the pot A has the minimum thickness and it must not supply excessive force when the wall of the pot A has the maximum thickness.

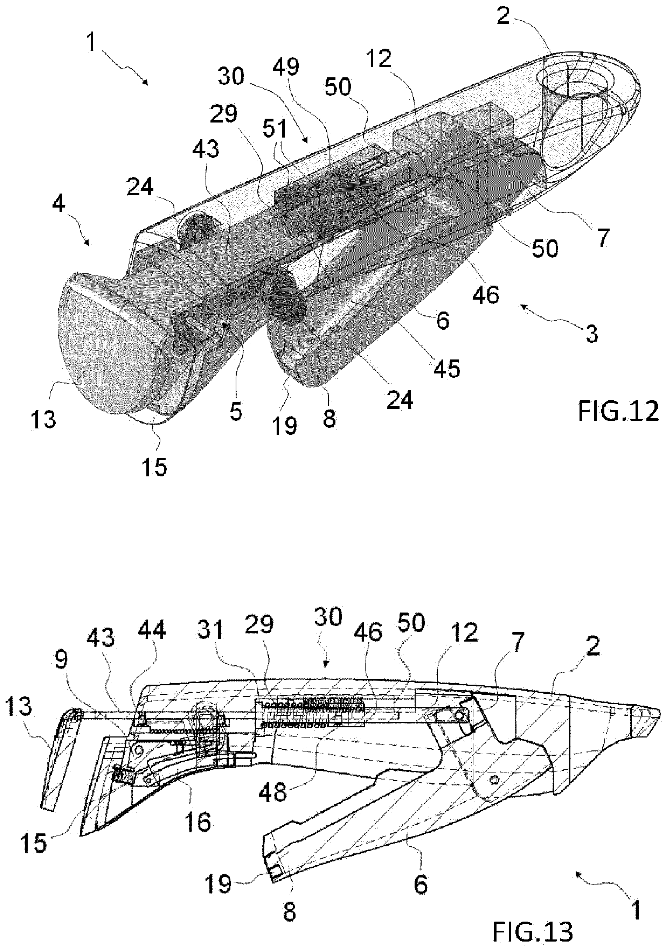

A further version of the anchoring members 4, according to the present invention, is shown in figures 12-15.

For the sake of clarity, in the following, we shall use the same reference numerals for the elements which have the same function with respect to the previous version.

The anchoring members 4, as shown in figure 12 and 13, comprise a gripping head 13 that projects from the grip 2. The aforementioned gripping head 13 is associated with a rod-shaped element 43 that is housed in the grip 2.

The rod-shaped element 43, in turn, is associated with the stem 12 which is equipped, at one end, with a terminal abutment head 31, and is slidingly housed inside the grip 2.

Similarly to what has been described in the previous version of the present invention, the locking members 5 comprise at least one retaining element 9, for example shaped like a rocker arm, equipped with at least one first toothing 10 that can be engaged with at least one respective second toothing 11 defined on the anchoring members 4.

More in detail, the second toothing 11 is located on the rod-shaped element 43, in particular in a rear portion thereof that faces onto the first toothing 10 of the retaining element 9.

The second toothing 11 can be made integral with the rod-shaped element or constrained to the latter through first removable connection means 44, as shown in figure 13, for example through screws or the like.

The rod-shaped element 43 has, at the end inside the grip 2, a substantially rectangular opening 45, which is closed in its rear part by a bushing 46.

The bushing 46 comprises a hole 47, the size of which is slightly greater than the section of the stem 12.

The stem 12 is positioned passing through the hole 47 of the bushing 46.

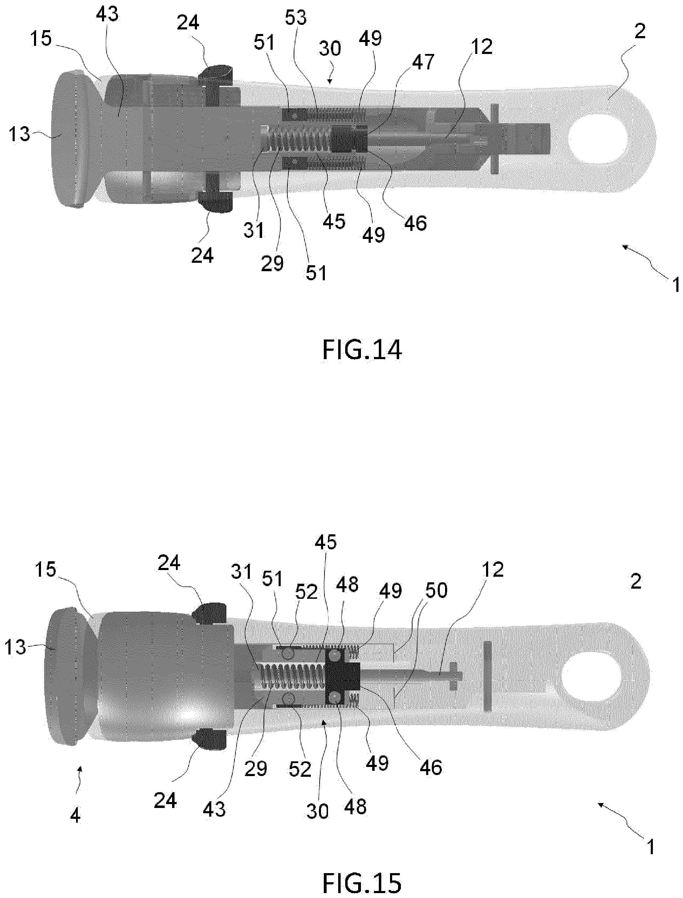

As shown in figure 13 and 15, the bushing 46 is constrained to the rod-shaped element 43 through second removable connection means 48, for example screws or pins or similar elements which are suitable for the purpose.

The anchoring members 4 comprise second elastic compensation means 29 that are located inside the opening 45.

More in detail, the second elastic means comprise a second compensation spring 29 along the stem 12.

As already indicated above for the previous version of the present invention, the second compensation spring 29 is suitable for adapting the closure of the gripping head 13 and the abutment surface 15 to the different thicknesses of the pot A.

The second spring 29 is compressed between the terminal abutment head 31 of the stem 12 itself and the bushing 46, as shown in figure 14.

In this version of the present invention, the anchoring members 4 comprise third elastic means 30, which are located adjacent with respect to the stem 12 and no longer in succession like in the previous version, having, therefore, a smaller bulk in length.

More in detail, the third elastic means 30 comprise at least one third spring 49, in a position that is parallel and adjacent with respect to the stem 12.

As described previously, the third elastic means 30 promote a return of the anchoring members 4 and of the lever element 6 into the non operative configuration, when it is desired to detach the handle 1 from the pot A.

In the present version the grip 2 comprises, inside it at its central portion, at least one abutment shoulder 50 for the third elastic means 30. Moreover, the third elastic means 30, in the present version, comprise a fixing element 51, that is constrained through third removable connection means 52, for example screws, along the portion of the rod-shaped element 43 adjacent to the opening 45.

The fixing element 51 comprises a guiding element 53, that is substantially coaxial with the third spring 49, for example a pin inside the third spring 49 or a hollow cylindrical element outside the third spring 49, and with a length that is shorter with respect to that of the third spring 49 itself in the compressed configuration.

The third spring 49 is housed inside the grip 2, constrained, at one end, to the fixing element 51 and, during the actuation of the anchoring members 4 in the coupling configuration, in abutment at the opposite end against the shoulder 50.

As shown in figure 14, it is possible to foresee the use of a pair of third springs 49, adjacent to one another on opposite sides with respect to the stem 12.

The pair of third springs 49 gives a greater balance during the return thrust of the anchoring members 4, from a coupling configuration to a non operative configuration.

Moreover, further embodiment of the third elastic means 30 are possible, comprising two or more third springs 49, arranged in positions that are different with respect to those previously described.

The operation of the device 1 according to the invention is, according to what has been described, completely intuitive: the user brings the handle 1 up to the pot A, in particular bringing the gripping head 13 and the abutment surface 15 to the inner and outer walls of the pot A respectively. At this point the user manually actuates the lever element 6 of the actuation means 3, pushing it inside the grip 2. In such a way the stem 12 is pulled back inside the grip 2 thus causing the locking of the gripping head 13 and of the abutment surface 15, in the coupling configuration, over the thickness of the wall of the pot A, as mentioned above the compensation spring 29 allows the handle to adapt to the different thicknesses of the wall of the pot A.

At the same time there is also the locking of the first toothing 10 of the retaining element 9 with the second toothing 11 on the tubular body 14 or on the rod-shaped element 43 of the anchoring members 4.

It should be noted that the toothings 10 and 11 have matching profiles that allow a movement of the tubular body 14 or of the rod-shaped element 43 in the locking direction of the gripping head 13 and of the abutment surface 15, whereas they make a movement in the opposite direction of unlocking of the gripping head 13 impossible, for example such matching profiles can be made with a saw tooth.

This gives maximum stability and safety when holding the pot A by the handle 1, which cannot therefore accidentally become unfastened.

Moreover, the lock that is obtained between the teeth 10 and 11 always allows a suitable locking strength to be obtained irrespective of the thickness of the wall of the pot A.

In order to bring the anchoring members 4 to the non operative configuration, the user exerts a substantially downward movement on the aforementioned buttons 24, which in turn act on the two side projections 26 of the retaining element 9.

In turn, the retaining element 9, by rotating around the pin 9a, moves the first toothing 10 away from the second toothing 11 of the tubular body 14 or of the rod-shaped element 43, thus disengaging the locking members 5 from the anchoring members 4, which thus separate from the pot A.

The return into operative locking configuration of the retaining element 9 is due, as described above, to the elastic action exerted from the aforementioned first retaining spring 27, whereas the return to the non operative configuration of the lever element 6 is assisted by the elastic action exerted by the third elastic means 30.

According to one version not according to the present invention illustrated in figures 10 and 11, the actuation means 3 can comprise at least one arm 35 laterally hinged to the grip 2 and associated with a toothed segment 36 which, through at least an idle wheel, in turn acts on a rack 38 associated with the anchoring members 4.

In particular, as a non limiting example, the actuation means 3 comprise two opposing arms 35 laterally hinged to the grip 2 so as to allow a comfortable balanced actuation by the user.

The arms 35 comprise respective toothed segments 36 which engage on respective gear wheels 37 rotatably housed substantially opposite one another in the grip 2 itself: such gear wheels 37 are then engaged on a rack 38 of the anchoring members 4.

According to what is illustrated in figures 10 and 11, the rack 38 can be a double toothing so as to better distribute the strain.

The anchoring members 4 comprise a mobile element 39 defining, on one side, the aforementioned rack 38 and, on the other side, at least one portion 40 for holding the pot A.

The mobile element 39 is slidingly housed inside the grip 2, except for at least the holding portion 40, and the pot A is locked in the coupling configuration between the holding portion 40 and at least one respective abutment area 41 of the grip 2.

It should be noted that by suitably sizing the toothed segments 36 and the gear wheels 37 it is possible to obtain a desirable transmission ratio so as to obtain the necessary locking force of the handle on the frying pan whilst still having moderate force on the arms 35. Between the mobile element 39 and the rack 38 a compensation spring 42 is foreseen, analogous to the spring 29 of the previous versions of handle, so as to adapt to the different wall thicknesses of the pot A.

Moreover, locking members 5 are foreseen (not illustrated here) the same as those illustrated in figure 3, or in figure 9, which act on the mobile element 39 so as to make the separation of the handle 1 from the pot A impossible.

The invention, thus conceived, makes it possible to obtain important technical advantages.

One important technical advantage consists in the fact that the handle 1 comprises locking members 5 that prevent it from accidentally separating from the pot A and the like, thus preventing the pots A themselves from falling and spilling out their content, and also keeping the user safe and keeping the work area clean and integral.

It has thus been seen how the invention achieves the proposed purposes.

The embodiments described and further equivalent variants can be conceived without departing from the scope of protection as defined by the following claims.

## Claims

1. Handle (1) for pots, pans, and similar cooking vessels, comprising a handgrip (2) including actuation means (3) of anchoring members (4) removable from a pot, or similar cooking vessels (A), said anchoring members (4) including a gripping head (13) and being movable from a non operative configuration, where they are disengaged from said pot (A), to a coupling configuration, where they are locked to portions of said pot (A), wherein in the coupling configuration, portions of the inner and outer walls of the pot (A) are locked onto the handle (1) respectively between the gripping head (13) and at least one respective abutment surface (15) of the handgrip (2), whereby the inner and outer walls of the pot (A) define a thickness, wherein said actuation means (3) are associated to locking members (5) of said anchoring members (4) in said coupling configuration, for safely and effectively gripping pots, pans and similar cooking vessels (A), wherein the actuation means (3) comprise at least a lever element (6) hinged to said handgrip (2), associated with at least one first end (7) thereof to said anchoring members (4) and engageable with a second end (8) thereof to said locking members (5) in said coupling configuration, : in which said locking members (5) are also removably engaged in an interlocking manner with said anchoring members (4)and said anchoring members (4) comprise at least second elastic compensation means (29) for different thickness of the wall of the pot (A).

2. Handle according to claim 1, wherein said locking members (5) comprise at least a retaining element (9) hinged in said handgrip (2) and provided with at least a first toothing (10) engageable with at least a second respective toothing (11) provided on said anchoring members (4).

3. Handle according to claim 2, wherein said first toothing (10) and second toothing (11) have joint profiles allowing the anchoring members (4) to move in the coupling direction with the pot (A), while preventing a movement in the opposite direction.

4. Handle according to claim 2 or 3, wherein said first toothing (10) and second toothing (11) have ratchet tooth joint profiles.

5. Handle according to claim 1, wherein said anchoring members (4) comprise at least a stem (12) slidably housed within said handgrip (2), associated at an end to said first end (7) of said lever element (6) and associated at the other end to at least a gripping head (13) protruding from said handgrip (2), at least said gripping head (13) being associated to at least a tubular body (14) housed in said handgrip (2) and housing within it at least a first section (12a) of said stem (12), said second toothing (11) being provided on said tubular body (14), in said coupling configuration, portions of the inner and outer walls of the pot (A) being locked to the handle (1) respectively between said gripping head (13) and at least a respective abutment surface (15) of said handgrip.

6. Handle according to claim 1, wherein said locking members (5) comprise at least a locking element (16) of said lever element (6) in said coupling configuration, said locking element (16) being pivoted on one hand to said retaining element (9), being housed in sliding rest in a respective opening (17) of said handgrip (2), and being engageable with a shaped terminal thereof (18) in a respective seat (19) defined at said second end (8) of said lever element (6), so as to removably fix it in said coupling configuration.

7. Handle according to claim 1, wherein said locking members (5) comprise at least a connecting rod (20) pivoted on one hand to said retaining element (9) and on the other hand to at least a respective saddle (21), said saddle (21) being slidably housed within said handgrip (2) and being engageable in a respective shaped seat (23) defined at said second end (8) of said lever element (6), so as to removably fix it in said coupling configuration.

8. Handle according to one of the previous claims, comprising disengaging means of said locking members (5) from said anchoring members (4), so as to return them into said non operative configuration.

9. Handle according to the previous claim, wherein said disengaging means comprise at least a hand-actuated button (24) associated to fixed parts of said retaining element (9) for uncoupling said first toothing (10) from said second toothing (11), from said coupling configuration to said non operative configuration, so at to allow disengaging said anchoring members (5) from the pot (A).

10. Handle according to claim 8 or 9, wherein said disengaging means comprise two opposite buttons (24) associated to two side projections (26) of said retaining element (9), said buttons (24) being housed projecting in respective slots (25) of said handgrip (2), said buttons (24) being selectively slidable in said slots (25) according to a predefined stroke for disengaging said first toothing (10) from said second toothing (11), from said coupling configuration to said non operative configuration, so as to disengage said anchoring members (4) from the pot (A).

11. Handle according to claim 1, wherein said retaining element (9) comprises at least first retaining elastic means (27), suitable for pushing it in the operative configuration.

12. Handle according to the previous claim, wherein said first elastic means comprise at least a first retaining spring (27) associated to a front pin (28) of said retaining element (9) and abutting on the other side on the inner side of said abutment surface (15) of said handgrip (2) on portions of the pot (A).

13. Handle according to claim 1, wherein said second elastic compensation means (29) are located on said stem (12), and are suitable for compensating the different thicknesses of the pot (A).

14. Handle according to claim 5, wherein said anchoring members (4) comprises third elastic means (30) operatively connected to said stem (12), so as to promote a return of the anchoring members (4) in non operative configuration, when it is desired to detach the handle (1) from the pot (A).

15. Handle according to the previous claim, wherein said third elastic means (30) are positioned in succession to said second elastic means (29) along said stem (12) or adjacent in a parallel manner to said second elastic means (29).

## Patentansprüche

1. Griff (1) für Töpfe, Pfannen und ähnliche Kochgefäße, umfassend einen Handgriff (2) einschließlich Betätigungsmittel (3) von Verankerungselementen (4), die von einem Topf oder ähnlichen Kochgefäßen (A) abnehmbar sind, wobei die besagten Verankerungselemente (4) einen Greifkopf (13) beinhalten und von einer nicht funktionsfähigen Konfiguration, in der sie von dem besagten Topf (A) gelöst sind, in eine Kupplungskonfiguration bewegbar sind, wo sie mit Abschnitten des besagten Topfes (A) verriegelt sind, worin in der Kupplungskonfiguration Abschnitte der Innen- und Außenwände des Topfes (A) auf dem Griff (1) jeweils zwischen dem Greifkopf (13) und mindestens einer jeweiligen Anschlagfläche (15) des Handgriffs (2) verriegelt sind, wodurch die Innen- und Außenwände des Topfes (A) eine Dicke definieren, worin die besagten Betätigungsmittel (3) mit Verriegelungselementen (5) der besagten Verankerungselemente (4) in der besagten Kupplungskonfiguration verbunden sind, um Töpfe, Pfannen und ähnliche Kochgefäße (A) sicher und effektiv zu greifen, worin die Betätigungsmittel (3) mindestens ein Hebelelement (6) mit gelenkiger Anordnung an dem besagten Handgriff (2) umfassen, der mit mindestens einem ersten Ende (7) davon mit den besagten Verankerungselementen (4) verbunden ist und mit einem zweiten Ende (8) davon mit den besagten Verriegelungselementen (5) in der besagten Kupplungskonfiguration, in der die besagten Verriegelungselemente (5) auch in einer verriegelnden Weise mit den besagten Verankerungselementen (4) abnehmbar in Eingriff stehen und die besagten Verankerungselemente (4) mindestens zweite elastische Kompensationsmittel (29) für verschiedene Dicken der Wand des Topfes (A) umfassen, in Eingriff bringbar ist.

2. Griff nach Anspruch 1, worin die besagten Verriegelungselemente (5) mindestens ein Rückhalteelement (9) umfassen, das in dem besagten Handgriff (2) gelenkig angeordnet und mit mindestens einer ersten Verzahnung (10) versehen ist, die mit mindestens einer zweiten jeweiligen Verzahnung (11), die an den besagten Verankerungselementen (4) vorgesehen ist, in Eingriff bringbar ist.

3. Griff nach Anspruch 2, worin die besagte erste Verzahnung (10) und zweite Verzahnung (11) Gelenkprofile aufweisen, die den Verankerungselementen das Bewegen in die Kupplungsrichtung mit dem Topf (A) ermöglichen, während eine Bewegung in die entgegengesetzte Richtung verhindert wird.

4. Griff nach Anspruch 2 oder 3, worin die besagte erste Verzahnung (10) und zweite Verzahnung (11) Sperrzahn-Gelenkprofile aufweisen.

5. Griff nach Anspruch 1, worin die besagten Verankerungselemente (4) mindestens einen Schaft (12), verschiebbar in dem besagten Handgriff (2) untergebracht, der an einem Ende mit dem besagten ersten Ende (7) des besagten Hebelelements (6) verbunden ist und am anderen Ende mit mindestens einem Greifkopf (13), der aus dem besagten Handgriff (2) vorsteht, verbunden ist, umfassen, wobei mindestens der besagte Greifkopf (13) mit mindestens einem rohrförmigen Körper (14) verbunden ist, der in dem besagten Handgriff (2) untergebracht ist und in dem mindestens ein erster Abschnitt (12a) des besagten Schaftes (12) untergebracht ist, wobei die besagte zweite Verzahnung (11) an dem besagten rohrförmigen Körper (14) vorgesehen ist, wobei in der besagten Kupplungskonfiguration Abschnitte der Innen- und Außenwände des Topfes (A) mit dem Griff (1) jeweils zwischen dem besagten Greifkopf (13) und mindestens einer jeweiligen Anschlagfläche (15) des besagten Handgriffs verriegelt sind.

6. Griff nach Anspruch 1, worin die besagten Verriegelungselemente (5) mindestens ein Verriegelungselement (16) des besagten Hebelelements (6) in der besagten Kupplungskonfiguration umfassen, wobei das besagte Verriegelungselement (16) einerseits an dem besagten Halteelement (9), das in Gleitauflage in einer jeweiligen Öffnung (17) des besagten Handgriffs (2) untergebracht ist, drehbar gelagert ist und mit einem geformten Ende (18) davon in einem jeweiligen Sitz (19), der an dem besagten zweiten Ende (8) des besagten Hebelelements (6) definiert ist, in Eingriff bringbar ist, um es in der besagten Kupplungskonfiguration abnehmbar zu fixieren.

7. Griff nach Anspruch 1, worin die besagten Verriegelungselemente (5) mindestens eine Verbindungsstange (20) umfassen, die einerseits an dem besagten Halteelement (9) und andererseits an mindestens einem jeweiligen Sattel (21) drehbar gelagert ist, wobei der besagte Sattel (21) verschiebbar in dem besagten Handgriff (2) untergebracht ist und in einen jeweiligen geformten Sitz (23), der an dem besagten zweiten Ende (8) des besagten Hebelelements (6) definiert ist, in Eingriff bringbar ist, um ihn in der besagten Kupplungskonfiguration abnehmbar zu fixieren.

8. Griff nach einem der vorangegangenen Ansprüche, umfassend Lösemittel der besagten Verriegelungselemente (5) aus den besagten Verankerungselementen (4), um sie in die besagte nicht funktionsfähige Konfiguration zurückzubringen.

9. Griff nach dem vorangehenden Anspruch, worin die besagten Lösemittel mindestens einen handbetätigten Knopf (24) umfassen, der mit festen Teilen des besagten Halteelements (9) verbunden ist, um die besagte erste Verzahnung (10) von der besagten zweiten Verzahnung (11) von der besagten Kupplungskonfiguration in die besagte nicht funktionsfähige Konfiguration zu entkuppeln, um das Lösen der besagten Verankerungselemente (5) von dem Topf (A) zu ermöglichen.

10. Griff nach Anspruch 8 oder 9, worin die besagten Lösemittel zwei gegenüberliegende Knöpfe (24) umfassen, die mit zwei Seitenvorsprüngen (26) des besagten Halteelements (9) verbunden sind, wobei die besagten Knöpfe (24) in jeweiligen Schlitzen (25) des besagten Handgriffs (2) vorspringend untergebracht sind, wobei die besagten Knöpfe (24) in den besagten Schlitzen (25) gemäß einem vordefinierten Hub zum Lösen der besagten ersten Verzahnung (10) von der besagten zweiten Verzahnung (11) aus der besagten Kupplungskonfiguration in die besagte nicht funktionsfähige Konfiguration selektiv verschiebbar sind, um die besagten Verankerungselemente (4) von dem Topf (A) zu lösen.

11. Griff nach Anspruch 1, worin das besagte Halteelement (9) mindestens ein erstes elastisches Haltemittel (27) umfasst, das geeignet ist, es in die funktionsfähige Konfiguration zu drücken.

12. Griff nach dem vorangehenden Anspruch, worin die besagten ersten elastischen Mittel mindestens eine erste Haltefeder (27) umfassen, die mit einem vorderen Stift (28) des besagten Halteelements (9) verbunden ist und auf der anderen Seite an der Innenseite der besagten Anschlagfläche (15) des besagten Handgriffs (2) an Abschnitten des Topfes (A) anliegt.

13. Griff nach Anspruch 1, worin die besagten zweiten elastischen Kompensationsmittel (29) auf dem besagten Schaft (12) angeordnet sind und zum Kompensieren der verschiedenen Dicken des Topfes (A) geeignet sind.

14. Griff nach Anspruch 5, worin die besagten Verankerungselemente (4) ein drittes elastisches Mittel (30) umfassen, das mit dem besagten Schaft (12) wirkverbunden ist, um eine Rückkehr der Verankerungselemente (4) in nicht funktionsfähige Konfiguration zu fördern, wenn das Entkuppeln des Griffs (1) vom Topf (A) gewünscht ist.

15. Griff nach dem vorangehenden Anspruch, worin die besagten dritten elastischen Mittel (30) nachfolgend zu den besagten zweiten elastischen Mitteln (29) entlang des besagten Schaftes (12) oder angrenzend in einer parallelen Weise zu den besagten zweiten elastischen Mitteln (29) angeordnet sind.

## Revendications

1. Poignée (1) pour marmites, casseroles et récipients de cuisine similaires, comprenant un manche (2) comportant des moyens d'actionnement (3) d'éléments d'ancrage (4) amovible d'une marmite, ou de récipients de cuisine (A) similaires, lesdits éléments d'ancrage (4) comprenant une tête de préhension (13) et étant mobile d'une configuration non opérationnelle, dans laquelle ils sont désaccouplés de ladite marmite (A), à une configuration accouplée, dans laquelle ils sont verrouillés sur des parties de ladite marmite (A), dans laquelle dans la configuration accouplée, des parties des parois intérieures et extérieures de la marmite (A) sont verrouillées sur la poignée (1) respectivement entre la tête de préhension (13) et au moins une surface de butée (15) respective du manche (2), moyennant quoi les parois intérieures et extérieures de la marmite (A) définissent une épaisseur, dans laquelle lesdits moyens d'actionnement (3) sont associés à des éléments de verrouillage (5) desdits éléments d'ancrage (4) dans ladite configuration accouplée, pour saisir de manière sûre et efficace des marmites, des casseroles et des récipients de cuisine (A) similaires, dans laquelle les moyens d'actionnement (3) comprennent au moins un élément de levier (6) articulé sur ledit manche (2), associé à au moins une première extrémité (7) de ceux-ci auxdits éléments d'ancrage (4) et pouvant être accouplé avec une deuxième extrémité (8) de ceux-ci auxdits éléments de verrouillage (5) dans ladite configuration accouplée, dans laquelle lesdits éléments de verrouillage (5) sont également accouplés de manière amovible de manière verrouillée avec lesdits éléments d'ancrage (4) et lesdits éléments d'ancrage (4) comprennent au moins des deuxièmes moyens de compensation élastiques (29) pour différentes épaisseurs de la paroi de la marmite (A).

2. Poignée selon la revendication 1, dans laquelle lesdits éléments de verrouillage (5) comprennent au moins un élément de retenue (9) articulé dans ledit manche (2) et doté d'au moins une première denture (10) pouvant être accouplée à au moins une deuxième denture (11) respective disposée sur lesdits éléments d'ancrage (4) .

3. Poignée selon la revendication 2, dans laquelle ladite première denture (10) et ladite deuxième denture (11) ont des profils conjoints permettant aux éléments d'ancrage (4) de se déplacer dans la direction d'accouplement avec la marmite (A), tout en empêchant un mouvement dans la direction opposée.

4. Poignée selon la revendication 2 ou 3, dans laquelle ladite première denture (10) et ladite deuxième denture (11) ont des profils conjoints en dents triangulaires.

5. Poignée selon la revendication 1, dans laquelle lesdits éléments d'ancrage (4) comprennent au moins une tige (12) contenue de manière coulissante à l'intérieur dudit manche (2), associée à une extrémité à ladite première extrémité (7) dudit élément de levier (6) et associée à l'autre extrémité à au moins une tête de préhension (13) saillante dudit manche (2), au moins ladite tête de préhension (13) étant associée à au moins un corps tubulaire (14) contenu dans ledit manche (2) et contenant au moins une première section (12a) de ladite tige (12), ladite deuxième denture (11) étant disposée sur ledit corps tubulaire (14), dans ladite configuration accouplée, des parties des parois intérieures et extérieures de la marmite (A) étant verrouillées sur la poignée (1) respectivement entre ladite tête de préhension (13) et au moins une surface de butée (15) respective dudit manche.

6. Poignée selon la revendication 1, dans laquelle lesdits éléments de verrouillage (5) comprennent au moins un élément de verrouillage (16) dudit élément de levier (6) dans ladite configuration accouplée, ledit élément de verrouillage (16) étant articulé d'une part sur ledit élément de retenue (9), étant contenu en butée coulissante dans une ouverture (17) respective dudit manche (2), et pouvant être accouplé avec une extrémité formée de celle-ci (18) dans un siège (19) respectif défini sur ladite deuxième extrémité (8) dudit élément de levier (6), de manière à le fixer de manière amovible dans ladite configuration accouplée.

7. Poignée selon la revendication 1, dans laquelle lesdits éléments de verrouillage (5) comprennent au moins une bielle (20) articulée d'une part sur ledit élément de retenue (9) et d'autre part sur au moins une selle (21) respective, ladite selle (21) étant contenue de manière coulissante à l'intérieur dudit manche (2) et pouvant être accouplée dans un siège formé (23) respectif défini à ladite deuxième extrémité (8) dudit élément de levier (6), de manière à le fixer de manière amovible dans ladite configuration accouplée.

8. Poignée selon l'une des revendications précédentes, comprenant des moyens de désaccouplement desdits éléments de verrouillage (5) à partir desdits éléments d'ancrage (4), de façon à les remettre dans ladite configuration non-opérationnelle.

9. Poignée selon la revendication précédente, dans laquelle lesdits moyens de désaccouplement comprennent au moins un bouton à commande manuelle (24) associé à des parties fixes dudit élément de retenue (9) pour désaccoupler ladite première denture (10) de ladite deuxième denture (11), de ladite configuration accouplée à ladite configuration non-opérationnelle, de façon à permettre le désaccouplement desdits éléments d'ancrage (5) de la marmite (A).

10. Poignée selon la revendication 8 ou 9, dans laquelle lesdits moyens de désaccouplement comprennent deux boutons opposés (24) associés à deux projections latérales (26) dudit élément de retenue (9), lesdits boutons (24) étant contenus en saillie dans les fentes (25) respectives dudit manche (2), lesdits boutons (24) étant sélectivement coulissants dans lesdites fentes (25) selon une course prédéfinie pour désaccoupler ladite première denture (10) de ladite deuxième denture (11), de ladite configuration accouplée à ladite configuration non-opérationnelle, de façon à désaccoupler lesdits éléments d'ancrage (4) de la marmite (A).

11. Poignée selon la revendication 1, dans laquelle ledit élément de retenue (9) comprend au moins des premiers moyens élastiques de retenue (27) adaptés pour le pousser dans la configuration opérationnelle.

12. Poignée selon la revendication précédente, dans laquelle lesdits premiers moyens élastiques comprennent au moins un premier ressort de retenue (27) associé à une goupille frontale (28) dudit élément de retenue (9) et en butée sur l'autre côté sur le côté intérieur de ladite surface de butée (15) dudit manche (2) sur des parties de la marmite (A).

13. Poignée selon la revendication 1, dans laquelle lesdits deuxièmes moyens de compensation élastiques (29) sont situés sur ladite tige (12), et sont adaptés pour compenser les différentes épaisseurs de la marmite (A) .

14. Poignée selon la revendication 5, dans laquelle lesdits éléments d'ancrage (4) comprennent des troisièmes moyens élastiques (30) raccordés opérationnellement à ladite tige (12), de façon à favoriser le retour des éléments d'ancrage (4) dans la configuration non-opérationnelle, quand on désire détacher la poignée (1) de la marmite (A).

15. Poignée selon la revendication précédente, dans laquelle lesdits troisièmes moyens élastiques (30) sont positionnés en succession desdits deuxièmes moyens élastiques (29) le long de ladite tige (12) ou adjacents de manière parallèle auxdits deuxièmes moyens élastiques (29) .
